# FASCICULE DE BREVET EUROPEEN

(11) **EP 0 999 964 B1**
(45) Date de publication et mention de la délivrance du brevet: **19.06.2002**
(21) Numéro de dépôt: 98939685.8
(22) Date de dépôt: 16.07.1998
(51) Int. Cl.: B60T 13/72

(54) **SERVOMOTEUR PNEUMATIQUE A CHAMBRE DE PILOTAGE**
PNEUMATISCHER KRAFTVERSTÄRKER MIT STEUERKAMMER
PNEUMATIC BRAKE BOOSTER WITH CONTROL CHAMBER

(30) Priorité: 31.07.1997 FR 9709740
(43) Date de publication de la demande: 17.05.2000
(73) Titulaire: Bosch Systemes de Freinage, 93700 Drancy (FR)
(72) Inventeur: LEVRAI, Roland, F-93240 Stains (FR)
(86) Numéro de dépôt international: FR9801551
(87) Numéro de publication internationale: WO9906257

(56) Documents cités:
- EP-A- 0 171 585
- DE-A- 4 004 249
- US-A- 4 893 691

## Description

La presente invention concerne les servomoteurs pneumatiques, et plus particulièrement les servomoteurs pneumatiques qui sont utilisés pour fournir une assistance au freinage des véhicules automobiles.

De tels servomoteurs sont bien connus dans la technique et comportent en général une enveloppe séparée de façon étanche par au moins une structure de cloison mobile en au moins une chambre avant reliée en permanence à une source de basse pression, et au moins une chambre arrière reliée sélectivement à la chambre avant ou à une source de haute pression par un moyen de valve à trois voies actionnée par une tige de commande.

Un tel agencement a pour but de créer une différence de pressions sur les deux faces de la cloison mobile pour engendrer sur une tige de poussée, actionnant par exemple un maître-cylindre commandant la pression hydraulique dans les moteurs de frein du véhicule, une force d'assistance s'ajoutant à la force d'actionnement exercée par le conducteur du véhicule sur la pédale de freinage.

On a développé depuis quelques années des dispositifs qui permettent de commander l'action des freins même si le conducteur du véhicule n'appuie pas sur la pédale de frein. De telles actions de freinage automatique peuvent être déclenchées par un ou plusieurs détecteurs de paramètres de fonctionnement ou d'attitude du véhicule par exemple pour empêcher les roues de patiner lors d'une accélération du véhicule, pour aider le conducteur du véhicule à démarrer dans une côte, ou sous la commande d'un dispositif de type radar anti-collision.

Des systèmes de ce type associés à des servomoteurs pneumatiques sont par exemple décrits dans les documents EP-A-0 171 585, EP-A-0 303 470 et EP-A-0 347 583. Les solutions illustrées dans ces documents présentent plusieurs inconvénients. Tout d'abord, elles nécessitent soit une modification notable de la cloison mobile séparant la chambre avant de la chambre arrière, et notamment de la partie centrale de cette cloison mobile, par rapport à la configuration classique, soit un piston totalement spécifique, afin de permettre l'application directe de la pression atmosphérique dans la chambre arrière pour un fonctionnement en freinage automatique.

D'autre part, lors d'un fonctionnement en freinage automatique, le temps de réponse du servomoteur est relativement long, du fait des pertes de charge importantes dans l'écoulement de l'air à travers l'électrovalve de pilotage, le soufflet, central ou excentré, de transfert de l'air, les conduits d'alimentation formés dans le piston pneumatique, et enfin le passage de valve relativement étroit de la valve à trois voies. Les mêmes pertes de charge se manifestent en sens inverse à la fin du fonctionnement en freinage automatique, pendant ce qu'il est convenu d'appeler le défreinage, et elles peuvent être assez importantes pour gêner le conducteur.

De plus, le soufflet de transfert d'air, et plus précisément sa partie centrale, est alternativement mis en pression - dépression en même temps qu'il est soumis à une compression - extension. Ces contraintes répétées favorisent l'usure rapide du soufflet, et nuisent donc à sa longévité, et à la fiabilité du servomoteur.

Enfin, le fonctionnement en freinage automatique est très difficile, voire même impossible à obtenir si le servomoteur n'est pas dans sa position de repos, c'est à dire si le conducteur du véhicule est en train d'appuyer sur la pédale de frein.

La présente invention se place dans ce contexte, et a pour objet de proposer un servomoteur pneumatique qui rende possible un fonctionnement en freinage automatique, que le servomoteur soit ou non en position de repos, en n'apportant qu'un nombre minimal de modifications à un servomoteur classique pour pouvoir utiliser un nombre maximal de ses différents composants sans avoir à les dessiner de nouveau et pour que les performances du servomoteur ne soient pas altérées par ces modifications, et dont le temps de réponse lors d'un fonctionnement en freinage automatique, ou lors d'un défreinage consécutif à un freinage automatique, soit réduit à une valeur minimale, le servomoteur devant être fiable en toutes circonstances.

La présente invention propose donc un servomoteur pneumatique d'assistance au freinage, comprenant une enveloppe rigide comportant une paroi arrière et une paroi avant, et séparée de façon étanche par au moins une première structure de cloison mobile en au moins une chambre avant reliée en permanence à une source de basse pression et au moins une chambre arrière reliée sélectivement à la chambre avant ou à une source de haute pression par un moyen de valve à trois voies actionnée par une tige de commande solidaire d'un plongeur, la première structure de cloison mobile étant solidaire d'un piston pneumatique susceptible de coulisser de façon étanche dans une ouverture de la paroi arrière de l'enveloppe du servomoteur, le moyen de valve à trois voies commandant la communication entre un premier passage relié à la chambre avant, un deuxième passage relié à la chambre arrière, et la source de haute pression, les premier et deuxième passages étant formés dans le piston pneumatique, une électrovalve à trois-voies et deux positions présentant une première entrée reliée à la source de basse pression, une deuxième entrée reliée à la source de haute pression et une sortie reliée à la chambre arrière du servomoteur, ce servomoteur comprenant une deuxième structure de cloison mobile, disposée entre la première structure de cloison mobile et la paroi arrière, indépendante de la première structure de cloison mobile, et séparant la chambre arrière en une chambre de travail délimitée par les première et deuxième structures de cloisons mobiles et une chambre de pilotage délimitée par la deuxième structure de cloison mobile et la paroi arrière, le premier passage du piston pneumatique débouchant dans la chambre avant et le deuxième passage débouchant dans la chambre de travail tandis que la sortie de l'électrovalve est reliée à une conduite débouchant dans la chambre de pilotage, le piston pneumatique traversant à coulissement étanche la deuxième structure de cloison mobile de manière à pouvoir librement coulisser par rapport à elle, et le piston pneumatique présentant une butée sur laquelle est susceptible de s'appuyer la deuxième structure de cloison mobile pour entraîner le piston pneumatique lorsqu'elle est sollicitée vers l'avant.

Un tel servomoteur est connu par exemple du document US-A-4 893 691.

Selon l'invention, la deuxième structure de cloison mobile comprend un disque rigide de diamètre réduit et une membrane annulaire déformable montée sur le disque rigide, et cette membrane annulaire est susceptible de se déformer élastiquement entre une première configuration, qu'elle adopte au repos lorsque la sortie de l'électrovalve est reliée à la source de basse pression, et une deuxième configuration qu'elle adopte lorsque la sortie de l'électrovalve met en communication la chambre de pilotage et la source de haute pression et dans laquelle elle vient en appui sur la première structure de cloison mobile.

On comprend donc que, grâce à une telle disposition, on obtient une chambre de pilotage du servomoteur, indépendante de la chambre de travail de ce dernier, et dans laquelle la pression pourra ètre commandée, à l'aide de l'électrovalve, et évoluer très rapidement de façon à obtenir un fonctionnement en freinage automatique avec un temps de réponse minimal, le fonctionnement en freinage manuel conservant toutes ses caractéristiques.

De préférence, la membrane annulaire déformable est munie sur sa périphérie extérieure d'une lèvre annulaire susceptible de coopérer de façon étanche avec la paroi arrière de l'enveloppe lorsqu'elle est dans sa première configuration, et avec la première structure de cloison mobile lorsqu'elle est dans sa deuxième configuration.

On pourra prévoir par exemple que le diamètre du disque rigide de la deuxième structure de cloison mobile soit égal à environ la moitié du diamètre de la première structure de cloison mobile.

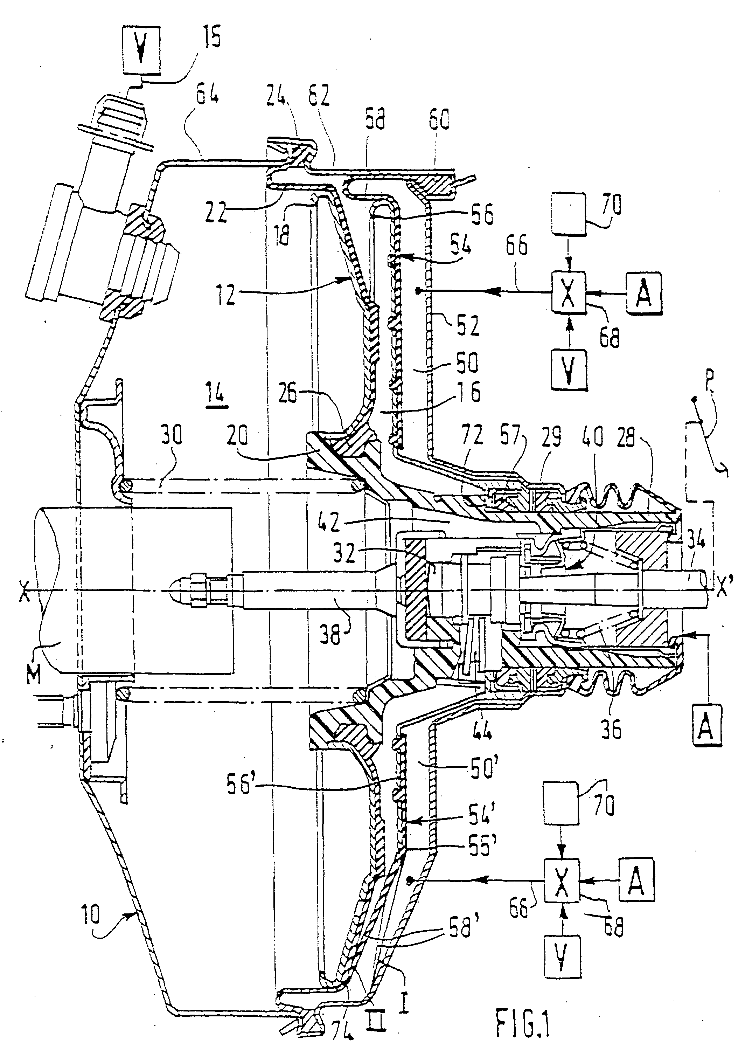

D'autres buts, caractéristiques et avantages de la présente invention apparaîtront mieux à la lecture de la description qui suit d'un mode de réalisation de l'invention donné à titre d'exemple non limitatif, en référence au dessin annexé sur lequel :
- la Figure unique représente une vue en coupe transversale d'un servomoteur pneumatique, réalisé conformément à la présente invention sur la moitié inférieure de cette Figure, la moitié supérieure de cette Figure représentant un servomoteur tel que décrit dans le document précité.

La Figure unique représente une vue en coupe d'un servomoteur pneumatique d'assistance au freinage prévu pour être placé de façon conventionnelle entre la pédale P de frein d'un véhicule et le maître-cylindre M commandant la pression dans le circuit de freinage hydraulique de ce véhicule.

Par convention, on appelle "avant" du servomoteur la partie de ce dernier tournée vers le maître-cylindre M et "arrière" du servomoteur la partie tournée vers la pédale de frein P. Sur la Figure, l'avant est ainsi à gauche et l'arrière à droite.

Le servomoteur représenté sur la Figure unique comprend une enveloppe extérieure 10 en forme de coquille, présentant une symétrie de révolution autour d'un axe X-X'. Une structure de cloison mobile 12 délimite à l'intérieur de l'enveloppe 10 une chambre avant 14, reliée en permanence à une source de dépression V par une canalisation 15, et une chambre arrière 16. La cloison mobile 12 constitue un piston d'assistance qui comporte une jupe rigide 18 solidaire d'un piston pneumatique 20.

La jupe 18 est associée à une membrane déroulante souple 22 par exemple en élastomère dont le bord périphérique extérieur est reçu de façon étanche grâce à un bourrelet 24 sur l'enveloppe extérieure 10. La membrane 22 peut être de forme annulaire et adhérisée par son bord périphérique intérieur sur la face arrière de la jupe 18, ou, comme on l'a représenté, de forme circulaire et comporter un bourrelet intérieur 26 reçu de façon étanche dans une gorge périphérique du piston pneumatique 20.

Le piston pneumatique 20 se prolonge vers l'arrière sous la forme d'une partie tubulaire 28 qui traverse de façon étanche la paroi arrière de l'enveloppe 10 grâce à un joint annulaire 29. Un ressort de compression 30 interposé entre la cloison mobile 12 et la face interne de la partie avant de l'enveloppe 10 maintient normalement le piston 20 dans la position arrière de repos illustrée sur la Figure, dans laquelle la chambre arrière 16 présente son volume minimal et la chambre avant 14 son volume maximal.

Un plongeur 32 est reçu à coulissement par son extrémité avant dans un alésage, éventuellement étagé, formé dans la partie centrale du piston pneumatique 20. L'extrémité avant d'une tige de commande 34 du servomoteur, disposée également selon l'axe X-X', est montée rotulante dans un alésage borgne du plongeur 32. L'extrémité arrière de la tige de commande 34 est commandée directement par la pédale de frein P du véhicule, et est rappelée dans sa position de repos par un ressort de rappel 36 en appui à l'intérieur de la partie tubulaire 28.

De façon connue, le plongeur 32 est susceptible de commander le fonctionnement d'un moyen de valve à trois voies 40, qui relie de façon sélective la chambre arrière 16 soit à la chambre avant 14 par l'intermédiaire d'un conduit 42, soit à l'espace annulaire autour de la tige de commande 34 par l'intermédiaire d'un conduit 44.

Dans la position de repos illustrée sur la Figure, la chambre avant 14 est en communication d'une part avec la source de dépression V par la canalisation 15, et d'autre part avec la chambre arrière 16 par l'intermédiaire du moyen de valve 40, qui autorise alors cette communication. La même pression s'exerçant sur les deux faces de la cloison mobile 12, celle-ci n'est soumise qu'à la force exercée par le ressort 30 et occupe la position arrière de repos représentée sur la Figure.

De façon classique, lorsque le conducteur du véhicule appuie sur la pédale de frein, la tige de commande 34 actionne le moyen de valve à trois voies 40 pour d'abord interrompre la communication entre les chambres avant 14 et arrière 16, puis pour faire communiquer l'espace annulaire autour de la tige de commande 34, où règne la pression atmosphérique A, avec la chambre arrière 16, et ainsi créer une différence de pressions de part et d'autre de la cloison mobile 12, résultant en une force d'assistance proportionnelle à la force d'entrée exercée sur la pédale de frein P, ces forces étant appliquées ensemble sur une tige de poussée 38 pour actionner le piston du maître-cylindre M.

Le fait d'adjoindre au servomoteur pneumatique d'assistance au freinage un dispositif de freinage automatique signifie que l'on ajoute au système que l'on vient de décrire des moyens pour commander le mouvement vers l'avant de la cloison mobile 12, et donc de la tige de poussée 38, sans que la tige de commande 34 ne soit sollicitée par une action volontaire du conducteur du véhicule.

Dans ce but, conformément à la présente invention, on équipe le servomoteur d'une troisième chambre, ou chambre de pilotage, pour remplir cette fonction.

Selon la moitié supérieure de la Figure unique, la chambre de pilotage 50 est définie entre la paroi arrière 52 de l'enveloppe 10 du servomoteur et une deuxième cloison mobile 54. La deuxième cloison mobile 54 comporte un disque rigide 56, susceptible de coulisser de façon étanche grâce à un joint annulaire 57 sur la partie tubulaire arrière 28 du piston pneumatique 20, ce disque rigide 56 étant associé à une deuxième membrane souple déroulante 58 dont un bourrelet périphérique extérieur 60 est fixé de façon étanche sur l'enveloppe extérieure 10.

On pourra prévoir, comme on l'a représenté sur la moitié supérieure de la Figure unique, que le bourrelet 60 soit retenu dans un sertissage entre la paroi arrière 52 de l'enveloppe 10 et une portion intermédiaire 62, sensiblement cylindrique de paroi latérale du servomoteur, cette portion intermédiaire 62 étant elle-même sertie sur la paroi avant 64 de l'enveloppe du servomoteur de façon à retenir le bourrelet 24 de la première membrane souple 22.

On pourra également prévoir que les deux bourrelets 24 et 60 soient retenus tous deux par une pièce intermédiaire de forme appropriée, cette pièce étant solidaire, par exemple par sertissage, des parois avant 64 et arrière 52 de l'enveloppe 10 du servomoteur.

La cloison mobile 54 sépare ainsi la chambre arrière du servomoteur en une chambre de travail 16 délimitée entre les deux cloisons mobiles 12 et 54, et dans laquelle débouche le conduit radial 44, et une chambre de pilotage 50, délimitée par la deuxième cloison mobile et la paroi arrière 52 du servomoteur, et isolée de façon étanche des chambres avant 14 et de travail 16 du servomoteur.

La chambre de pilotage 50 est raccordée par une conduite externe 66 à une électrovanne à deux positions et trois voies 68 dont la position est commandée par le signal délivré par un ensemble 70 de détection de paramètres de fonctionnement ou d'attitude du véhicule devant entraîner un fonctionnement en freinage automatique. Les différentes possibilités et les différents types de capteurs sont décrits en détail dans l'art antérieur précité. Il suffit de dire ici que, lorsque le freinage automatique doit être commandé, l'électrovanne 68 met en relation la conduite 66 avec la pression atmosphérique A alors que, durant toutes les autres phases de fonctionnement, l'électrovanne 68 met la conduite 66 en relation avec la source de dépression V, qui peut avantageusement être la même que celle qui est reliée à la canalisation 15, et qui peut par exemple être prélevée sur la tubulure d'admission du moteur du véhicule ou être fournie par une pompe à vide.

Le fonctionnement du servomoteur qui vient d'être décrit se comprend aisément. Lors des phases normales de fonctionnement, c'est-à-dire lorsque la commande de freinage automatique n'est pas active, la troisième chambre 50 est maintenue en permanence à la même pression réduite que la chambre avant 14.

En position de repos du servomoteur, la valve à trois voies 40 permet la communication entre la chambre avant 14 et la chambre de travail 16 par l'intermédiaire des conduits 42 et 44, la chambre de pilotage 50 étant isolée de ces deux chambres 14 et 16 et étant soumise à la pression réduite de la source de basse pression V. Comme on l'a vu plus haut, lorsque le conducteur du véhicule appuie sur la pédale de frein, la valve à trois voies 40 interrompt d'abord la communication entre la chambre avant 14 et la chambre arrière de travail 16, puis fait communiquer l'espace annulaire autour de la tige de commande 34 avec la chambre arrière 16, ce qui crée ainsi une différence de pressions de part et d'autre de la cloison mobile 12, résultant en une force d'assistance.

La pression régnant dans la chambre arrière 16 étant supérieure à la pression régnant dans la troisième chambre 50, constante et égale à la pression fournie par la source de dépression V, il en résulte que la deuxième cloison mobile 54 est soumise à la même différence de pressions et qu'elle est donc sollicitée vers l'arrière en butée sur la paroi arrière 52 du servomoteur, qui se comporte alors exactement comme un servomoteur classique, la partie tubulaire arrière 28 du piston pneumatique 20 coulissant dans les joints annulaires 29 et 57.

Lorsque le conducteur désire mettre fin à son action de freinage, il relâche son effort sur la pédale de frein, ce qui a pour effet de faire reculer le plongeur 32, et d'actionner la valve à trois voies 40 pour interrompre la communication entre l'atmosphère et la chambre arrière 16, puis mettre cette dernière en communication avec la chambre avant 14. Les pressions dans ces deux chambres 14 et 16 peuvent alors s'égaliser, de sorte que le servomoteur retourne à la position de repos représentée sur la moitié supérieure de la Figure unique.

Lorsque l'ensemble de détection 70 commande un fonctionnement en freinage automatique, il fait basculer l'électrovanne 68 pour qu'elle mette en communication l'atmosphère A avec la conduite 66, et donc avec la chambre de pilotage 50.

Si le servomoteur est à ce moment en position de repos, la pression régnant dans la chambre de travail 16 est celle qui est fournie par la source de basse pression V à la chambre avant 14 et communiquée par les conduits 42 et 44. De cette manière, la deuxième cloison mobile 54 est soumise à la différence des pressions régnant dans les chambres 16 et 50, s'exerçant sur ses deux faces, et qui engendre sur cette cloison mobile 54 une force dirigée vers l'avant.

La deuxième cloison mobile se déplace donc vers l'avant, en entraînant avec elle la première cloison mobile 12 par l'intermédiaire d'un épaulement 72 formé sur le piston pneumatique 20 à l'avant de la partie tubulaire arrière 28. La première cloison mobile 12 entraîne alors à son tour la tige de poussée 38 qui actionne le maître-cylindre et engendre une augmentation de pression dans le circuit hydraulique reliant ce maître-cylindre aux freins de roues, produisant ainsi l'action de freinage automatique souhaitée.

Lorsque l'ensemble de détection 70 commande l'arrêt du fonctionnement en freinage automatique, il fait basculer l'électrovanne 68 pour qu'elle mette en communication la source de dépression V avec la conduite 66, et donc avec la chambre de pilotage 50. La deuxième cloison mobile 54 n'exerce donc plus aucune force sur la première cloison mobile 12, qui n'est alors plus soumise qu'à l'action du ressort 30, qui ramène les deux cloisons mobiles 12 et 54 dans la position arrière de repos représentée sur la Figure unique.

Si le servomoteur est à ce moment en fonctionnement, c'est à dire si le conducteur du véhicule est déjà en train de freiner, la pression régnant dans la chambre arrière 16 est alors comprise entre la dépression régnant dans la chambre avant 14 et la pression atmosphérique régnant dans le volume annulaire autour de la tige de commande 34, et la première cloison mobile 12 se trouve éloignée de la deuxième cloison mobile 54 d'une quantité proportionnelle à l'effort de freinage appliqué sur la pédale de frein, comme on l'a déjà expliqué plus haut

L'admission d'air à la pression atmosphérique dans la chambre de pilotage 50 a comme précédemment pour effet de créer sur la deuxième cloison mobile 54 une force dirigée vers l'avant. La deuxième cloison mobile 54 se déplace donc vers l'avant en coulissant sur la partie tubulaire arrière 28 du piston pneumatique 20 par l'intermédiaire du joint 57.

Pendant ce mouvement, la deuxième cloison mobile 54 comprime le volume situé entre elle et la première cloison mobile 12, engendrant ainsi une légère augmentation de la différence de pressions s'exerçant sur les deux faces de la première cloison mobile 12, et causant ainsi un léger mouvement vers l'avant de cette dernière.

Si la pression dans la chambre de travail 16 s'élève à une valeur inférieure à la pression atmosphérique régnant dans la chambre de pilotage 50, alors le mouvement de la deuxième cloison mobile 54 se poursuit jusqu'à ce que cette dernière vienne en butée contre l'épaulement 72 du piston pneumatique 20, les deux cloisons mobiles avançant alors en butée l'une sur l'autre, en fournissant une force d'assistance maximale.

Si la pression dans la chambre de travail 16 s'élève à une valeur égale à la pression atmosphérique régnant dans la chambre de pilotage 50, alors le mouvement de la deuxième cloison mobile 54 par rapport à la première cloison mobile 12 s'interrompt à une distance prédéterminée de l'épaulement 72 du piston pneumatique 20, les deux cloisons mobiles avançant alors de conserve, en fournissant encore une force d'assistance maximale.

Lorsque l'ensemble de détection 70 commande l'arrêt du fonctionnement en freinage automatique, il fait basculer l'élèctrovanne 68 pour qu'elle mette en communication la source de dépression V avec la conduite 66, et donc avec la chambre de pilotage 50.

La deuxième cloison mobile 54 est alors soumise à une force dirigée vers l'arrière résultant de la différence de pressions s'exerçant sur ses deux faces, la face arrière étant soumise à la basse pression fournie par la source V et la face avant étant soumise à la pression intermédiaire qui régnait dans la chambre de travail 16 avant que l'ensemble de détection 70 ne commande le fonctionnement en freinage automatique. La deuxième cloison mobile 54 reprend alors sa position arrière de repos en coulissant sur la partie tubulaire arrière 28 du piston pneumatique 20.

La force d'assistance fournie par le servomoteur reprend alors la valeur qu'elle avait avant ce fonctionnement et qui était proportionnelle à la force exercée par le conducteur sur la pédale de frein.

On voit donc que, quelle que soit la position de la valve à trois voies 40 lors du basculement de l'électrovanne 68, la force d'assistance fournie par le servomoteur s'établit rapidement à une valeur égale à la force d'assistance maximale nécessaire à un mode de fonctionnement en freinage automatique. En effet, dans un tel mode de fonctionnement, la pression atmosphérique est transmise à la chambre de pilotage 50 ou évacuée de cette chambre directement par l'électrovalve 68, sans rencontrer d'autre obstacle. La pression à l'intérieur de la chambre de pilotage 50 peut donc croître et décroître très rapidement, procurant ainsi un temps de réponse minimal, aussi bien pour un freinage que pour un défreinage.

On a représenté sur la moitié inférieure de la Figure unique une variante du mode de réalisation qui vient d'être décrit, dans laquelle les éléments identiques ou équivalents à ceux qui viennent d'être décrits sont affectés du même signe de référence, éventuellement affecté d'un « prime ».

Selon cette variante, la deuxième cloison mobile 54' comporte un disque rigide 56', lui aussi susceptible de coulisser de façon étanche grâce au joint annulaire 57 sur la partie tubulaire arrière 28 du piston pneumatique 20. Le disque rigide 56' est de diamètre réduit, notablement inférieur à celui du disque 56 précédemment décrit, par exemple égal à environ la moitié du diamètre du disque 56.

Le disque rigide 56' est associé à une deuxième membrane semi-rigide 58', déformable, et munie sur sa périphérie extérieure d'une lèvre annulaire 74. De façon plus précise, la membrane 58' est maintenue par le disque 56' sur toute la surface plane arrière de ce dernier, délimitée par le bord périphérique extérieur 55'. Au delà de ce bord 55', la membrane 58' adopte une forme tronconique, d'axe X-X', dont la petite base est délimitée par le bord 55' du disque 56', et dont la grande base est délimitée par la lèvre annulaire 74.

La membrane 58' est susceptible d'adopter plusieurs positions selon les conditions de fonctionnement. Dans sa position de repos, la membrane 58' est dans une première position, référencée I, en appui sur la paroi arrière 52' du servomoteur.

Comme dans le mode de réalisation précédent, dans cette position de repos, la cloison mobile 54' sépare la chambre arrière du servomoteur en une chambre dé travail 16 délimitée entre les deux cloisons mobiles 12 et 54', et dans laquelle débouche le conduit radial 44, et une chambre de pilotage 50', délimitée par la deuxième cloison mobile 54' et la paroi arrière 52' du servomoteur.

Le fonctionnement du servomoteur réalisé selon cette variante est identique à celui qui a déjà été décrit plus haut. Lors des phases normales de fonctionnement, c'est-à-dire lorsque la commande de freinage automatique n'est pas active, la troisième chambre 50 est maintenue en permanence à la même pression réduite que la chambre avant 14.

Lorsque le conducteur du véhicule appuie sur la pédale de frein, la valve à trois voies 40 interrompt d'abord la communication entre la chambre avant 14 et la chambre arrière de travail 16, puis fait communiquer l'espace annulaire autour de la tige de commande 34 avec la chambre arrière 16. La différence de pressions ainsi créée agit d'une part sur la première cloison mobile 12 pour engendrer la force d'assistance au freinage, et elle agit d'autre part sur la deuxième cloison mobile 54' pour confirmer son appui sur la paroi arrière 52' du servomoteur, dans sa position de repos.

En effet, la pression régnant dans la chambre arrière 16 étant supérieure à la pression régnant dans la troisième chambre 50', constante et égale à la pression fournie par la source de dépression V, il en résulte que la deuxième cloison mobile 54' est soumise à la même différence de pressions et qu'elle est donc sollicitée vers l'arrière en butée sur la paroi arrière 52' du servomoteur. Ce dernier se comporte encore comme un servomoteur classique, la partie tubulaire arrière 28 du piston pneumatique 20 coulissant dans les joints annulaires 29 et 57, la deuxième cloison mobile 54' restant immobile.

Lorsque l'ensemble de détection 70 commande un fonctionnement en freinage automatique, il fait basculer l'électrovanne 68 pour qu'elle mette en communication l'atmosphère A avec la conduite 66, et donc avec la chambre de pilotage 50'.

Si le servomoteur est à ce moment en position de repos, la pression régnant dans la chambre de travail 16 est celle qui est fournie par la source de basse pression V. La deuxième membrane 58' est alors soumise à la différence des pressions régnant dans les chambres 16 et 50', s'exerçant sur ses deux faces, et qui engendre sur cette deuxième membrane 58' une force dirigée vers l'avant.

La deuxième membrane 58' se déforme donc et adopte la deuxième position, référencée II, la lèvre annulaire se déplaçant vers l'avant et venant brusquement en appui sur la première cloison mobile 12, à la manière d'une rondelle Belleville. A cet instant, la pression dans la chambre de pilotage 50' peut augmenter, d'où il résulte, comme dans le mode de réalisation précédent, que la deuxième cloison mobile 54' entraîne avec elle la première cloison mobile 12 par l'intermédiaire de l'épaulement 72 du piston pneumatique 20, ce qui provoque l'actionnement du maître-cylindre M et une augmentation de pression dans le circuit hydraulique reliant ce maître-cylindre aux freins de roues.

Lorsque l'ensemble de détection 70 commande l'arrêt du fonctionnement en freinage automatique, il fait basculer l'électrovanne 68 pour qu'elle mette en communication la source de dépression V avec la conduite 66, et donc avec la chambre de pilotage 50'. L'action du ressort 30 devient alors prépondérante et ramène les deux cloisons mobiles 12 et 54' dans leur position arrière de repos, la deuxième cloison mobile basculant alors de la position II à la position I, le servomoteur reprenant ainsi la configuration représentée sur la moitié inférieure de la Figure unique.

Si le servomoteur est à ce moment en fonctionnement, c'est à dire si la pression régnant dans la chambre arrière 16 est comprise entre la dépression régnant dans la chambre avant 14 et la pression atmosphérique, la première cloison mobile 12 se trouvant éloignée de la deuxième cloison mobile 54 d'une quantité proportionnelle à l'effort de freinage appliqué sur la pédale de frein, l'admission d'air à la pression atmosphérique dans la chambre de pilotage 50' a comme précédemment pour effet de créer sur la deuxième cloison mobile 54' une force dirigée vers l'avant.

La deuxième membrane 58' se déforme donc et adopte une position dans laquelle la lèvre annulaire 74 se déplace vers l'avant et vient en appui sur la première cloison mobile 12, qui est en position avancée par rapport au disque 56', et donc en adoptant une configuration tronconique de demi-angle au sommet inférieur à celui qu'elle possède quand elle est dans la position référencée II. A cet instant, la chambre de pilotage 50' se trouve isolée de la chambre de travail 16, et la pression peut s'y établir à une valeur égale à celle de la pression atmosphérique. Il en résulte donc, comme dans le mode de réalisation précédent, que la deuxième cloison mobile 54' peut avancer vers la première cloison mobile 12, la lèvre 74 glissant sur cette dernière pour se retrouver dans la position référencée II.

La deuxième cloison mobile 54' arrive alors en butée sur l'épaulement 72 du piston pneumatique 20, et elle entraîne avec elle la première cloison mobile 12, ce qui provoque l'actionnement du maître-cylindre M et une augmentation de pression dans le circuit hydraulique reliant ce maître-cylindre aux freins de roues.

Comme on l'a vu plus haut, pendant ce mouvement, la deuxième cloison mobile 54" comprime le volume situé entre elle et la première cloison mobile 12, engendrant ainsi une légère augmentation de la différence de pressions s'exerçant sur les deux faces de la première cloison mobile 12, et causant ainsi un léger mouvement vers l'avant de cette dernière.

Si la pression dans la chambre de travail 16 s'élève à une valeur égale à la pression atmosphérique régnant dans la chambre de pilotage 50', alors le mouvement de la deuxième cloison mobile 54' par rapport à la première cloison mobile 12 s'interrompt à une distance prédéterminée de l'épaulement 72 du piston pneumatique 20, les deux cloisons mobiles avançant alors de conserve, en fournissant encore une force d'assistance maximale.

Lorsque l'ensemble de détection 70 commande l'arrêt du fonctionnement en freinage automatique, il fait basculer l'électrovanne 68 pour qu'elle mette en communication la source de dépression V avec la conduite 66, et donc avec la chambre de pilotage 50'.

La deuxième membrane 58' est alors soumise à une force dirigée vers l'arrière résultant de la différence de pressions s'exerçant sur ses deux faces, la face arrière étant soumise à la basse pression fournie par la source V et la face avant étant soumise à la pression intermédiaire qui régnait dans la chambre de travail 16 avant que l'ensemble de détection 70 ne commande le fonctionnement en freinage automatique. La lèvre 74 de la deuxième membrane 58' revient alors en butée sur la paroi arrière 52' du servomoteur, et reprend sa position arrière de repos en coulissant sur la partie tubulaire arrière 28 du piston pneumatique 20.

On voit donc là encore que, quelle que soit la position de la valve à trois voies 40 lors du basculement de l'électrovanne 68, la force d'assistance fournie par le servomoteur s'établit rapidement à une valeur égale à la force d'assistance maximale nécessaire à un mode de fonctionnement en freinage automatique. En effet, dans cette variante de réalisation comme dans celle qui a été décrite plus haut, la pression atmosphérique est transmise à la chambre de pilotage 50' ou évacuée de cette chambre directement par l'électrovalve 68, sans rencontrer d'autre obstacle. La pression à l'intérieur de la chambre de pilotage 50' peut donc croître et décroître très rapidement, procurant ainsi un temps de réponse minimal, aussi bien pour un freinage que pour un défreinage.

Un avantage particulier de cette variante de réalisation réside dans le fait qu'il n'est plus nécessaire d'effectuer les deux sertissages entre les trois parties d'enveloppe du servomoteur, et que de plus il est possible d'utiliser une paroi arrière conventionnelle de servomoteur, uniquement modifiée par l'adjonction de la conduite externe 66.

On a donc bien réalisé un servomoteur pneumatique qui rend possible un fonctionnement en freinage automatique, que le servomoteur soit ou non en position de repos, dont le temps de réponse lors d'un fonctionnement en freinage automatique, ou lors d'un défreinage consécutif à un freinage automatique, est réduit à une valeur minimale puisque l'air à la pression atmosphérique est admis dans la chambre de pilotage en ne rencontrant pas d'autre obstacle que celui qui est constitué de l'électrovalve pneumatique 68. Un tel servomoteur est obtenu en n'apportant qu'un nombre minimal de modifications à un servomoteur classique, de sorte que l'on peut utiliser un nombre maximal de composants de conception conventionnelle sans avoir à les dessiner de nouveau. Les performances du servomoteur ne sont donc pas altérées par ces modifications, et le servomoteur est ainsi fiable en toutes circonstances.

Bien entendu, la présente invention n'est pas limitée au mode de réalisation qui a été décrit, mais elle est susceptible au contraire de recevoir de nombreuses variantes qui apparaîtront à l'homme du métier. C'est ainsi par exemple que l'invention est applicable aussi bien à des servomoteurs simples ainsi qu'on l'a représenté qu'à des servomoteurs en tandem ou à chambre additionnelle. Elle est également applicable à des servomoteurs équipés d'un disque de réaction comme on l'a représenté ou à des servomoteurs à réaction hydraulique, mécanique ou pneumatique.

## Revendications

1. Servomoteur pneumatique d'assistance au freinage, comprenant une enveloppe rigide (10) comportant une paroi arrière (52, 52') et une paroi avant (64), et séparée de façon étanche par au moins une première structure de cloison mobile (12) en au moins une chambre avant (14) reliée en permanence à une source de basse pression (V) et au moins une chambre arrière (16) reliée sélectivement à la chambre avant (14) ou à une source de haute pression (A) par un moyen de valve à trois voies (40) actionnée par une tige de commande (34) solidaire d'un plongeur (32), la première structure de cloison mobile (12) étant solidaire d'un piston pneumatique (20) susceptible de coulisser de façon étanche dans une ouverture de la paroi arrière (52, 52') de l'enveloppe (10) du servomoteur, le moyen de valve à trois voies (40) commandant la communication entre un premier passage (42) relié à la chambre avant (14), un deuxième passage (44) relié à la chambre arrière (16), et la source de haute pression (A), les premier (42) et deuxième (44) passages étant formés dans le piston pneumatique (20), une électrovalve (68) à trois voies et deux positions présentant une première entrée reliée à la source de basse pression (V), une deuxième entrée reliée à la source de haute pression (A) et une sortie reliée à la chambre arrière du servomoteur, ce servomoteur comprenant une deuxième structure de cloison mobile (54, 54'), disposée entre la première structure de cloison mobile (12) et la paroi arrière (52, 52'), indépendante de la première structure de cloison mobile (12), et séparant la chambre arrière en une chambre de travail (16) délimitée par les première (12) et deuxième (54, 54') structures de cloisons mobiles et une chambre de pilotage (50, 50') délimitée par la deuxième structure de cloison mobile (54, 54') et la paroi arrière (52, 52'), le premier passage (42) du piston pneumatique (20) débouchant dans la chambre avant (14) et le deuxième passage (44) débouchant dans la chambre de travail (16) tandis que la sortie de l'électrovalve (68) est reliée à une conduite (66) débouchant dans la chambre de pilotage (50, 50'), le piston pneumatique (20) traversant à coulissement étanche la deuxième structure de cloison mobile (54, 54') de manière à pouvoir librement coulisser par rapport à elle, et le piston pneumatique (20) présentant une butée (72) sur laquelle est susceptible de s'appuyer la deuxième structure de cloison mobile (54, 54') pour entraîner le piston pneumatique (20) lorsqu'elle est sollicitée vers l'avant **caractérisé en ce que** la deuxième structure de cloison mobile (54') comprend un disque rigide (56') de diamètre réduit et une membrane annulaire déformable (58') montée sur le disque rigide (56'), et **en ce que** cette membrane annulaire (58') est susceptible de se déformer élastiquement entre une première configuration (I), qu'elle adopte au repos lorsque la sortie de l'électrovalve (68) est reliée à la source de basse pression (V), et une deuxième configuration (II) qu'elle adopte lorsque la sortie de l'électrovalve (68) met en communication la chambre de pilotage (50') et la source de haute pression (A) et dans laquelle elle vient en appui sur la première structure de cloison mobile (12).

2. Servomoteur pneumatique selon la revendication 1, **caractérisé en ce que** la membrane annulaire déformable (58') est munie sur sa périphérie extérieure d'une lèvre annulaire (74) susceptible de coopérer de façon étanche avec la paroi arrière (52') de l'enveloppe (10) lorsqu'elle est dans sa première configuration (I), et avec la première structure de cloison mobile (12) lorsqu'elle est dans sa deuxième configuration (II).

3. Servomoteur pneumatique selon la revendication 1, **caractérisé en ce que** le diamètre du disque rigide (58') de la deuxième structure de cloison mobile (54') est égal à environ la moitié du diamètre de la première structure de cloison mobile (12).

## Claims

1. Pneumatic brake-booster comprising a rigid casing (10) which has a rear wall (52, 52') and a front wall (64) and is divided in leaktight fashion by at least a first moving partition structure (12) into at least a front chamber (14) permanently connected to a source of low pressure (V) and at least one rear chamber (16) connected selectively to the front chamber (14) or to a source of high pressure (A) by a three-way valve means (40), this valve being operated by an operating rod (34) secured to a plunger (32), the first moving partition structure (12) being secured to a pneumatic piston (20) capable of sliding in leaktight fashion in an opening in the rear wall (52, 52') of the casing (10) of the booster, the three-way valve means (40) controlling the communication between a first passage (42) connected to the front chamber (14), a second passage (44) connected to the rear chamber (16), and the source of high pressure (A), the first passage (42) and the second passage (44) both being formed in the pneumatic piston (20), a three-way, two-position solenoid valve (68) having a first inlet connected to the source of low pressure (V), a second inlet connected to the source of high pressure (A) and an outlet connected to the rear chamber of the booster, this booster having a second moving partition structure (54,' 54') arranged between the first moving partition structure (12) and the rear wall (52, 52'), independent of the first moving partition structure (12), and dividing the rear chamber into a working chamber (16) delimited by the first moving partition structure (12) and second moving partition structure (54, 54') and a control chamber (50, 50') delimited by the second moving partition structure (54, 54') and the rear wall (52, 52'), the first passage (42) of the pneumatic piston (20) opening into the front chamber (14) and the second passage (44) opening into the working chamber (16), while the outlet of the solenoid valve (68) is connected to a duct (66) opening into the control chamber (50, 50'), the pneumatic piston (20) passing with a leaktight sliding through the second moving partition structure (54, 54') so that it can slide freely with respect to it, and the pneumatic piston (20) having a stop (72) against which the second moving partition structure (54, 54') can rest so as to carry the pneumatic piston (20) along with it when it is urged forwards, **characterized in that** the second moving partition structure (54') comprises a rigid disc (56') of small diameter and a deformable annular membrane (58') mounted on the rigid disc (56'), and **in that** this annular membrane (58') can be deformed elastically between a first configuration (I), that it adopts at rest when the output of the solenoid valve (68) is connected to the source of low pressure (V), and a second configuration (II) that it adopts when the outlet of the solenoid valve (68) allows the control chamber (50') and the source of high pressure (A) to communicate, and in which position it comes to rest against the first moving partition structure (12).

2. Pneumatic booster according to Claim 1, **characterized in that** the deformable annular membrane (58') is equipped on its outer periphery with an annular lip (74) capable of interacting in leaktight fashion with the rear wall (52') of the casing (10) when it is in its first configuration (I), and with the first moving partition structure (12) when it is in its second configuration (II).

3. Pneumatic booster according to Claim 1, **characterized in that** the diameter of the rigid disc (58') of the second moving partition structure (54') is equal to approximately half the diameter of the first moving partition structure (12).

## Patentansprüche

1. Pneumatischer Bremskraftverstärker mit einem starren Gehäuse (10), das eine hintere Wand (52, 52') und eine vordere Wand (64) aufweist und auf dichte Weise durch wenigstens eine erste bewegliche Trennwandstruktur (12) in wenigstens eine vordere Kammer (14), die stets mit einer Niederdruckquelle (V) verbunden ist, und in wenigstens eine hintere Kammer (16) geteilt ist, die selektiv mit der vorderen Kammer (14) oder mit einer Hochdruckquelle (A) durch eine Dreiwegeventil-Anordnung (40) verbunden ist, die durch eine Steuerstange (34) betätigt wird, welche mit einem Tauchkolben (32) fest verbunden ist, wobei die erste bewegliche Trennwandstruktur (12) fest mit einem pneumatischen Kolben (20) verbunden ist, der auf dichte Weise in einer Öffnung der hinteren Wand (52, 52') des Gehäuses (10) des Bremskraftverstärkers gleiten kann, wobei die Dreiwegeventil-Anordnung (40) die Verbindung zwischen einer ersten Durchführung (42), die mit der vorderen Kammer (14) verbunden ist, einer zweiten Durchführung (44), die mit der hinteren Kammer (16) verbunden ist, und der Hochdruckquelle (A) steuert, wobei die erste Durchführung (42) und die zweite Durchführung (44) in dem pneumatischen Kolben (20) gebildet sind, wobei ein Dreiwege-Elektroventil (68) mit zwei Stellungen einen ersten Eingang aufweist, der mit der Niederdruckquelle (V) verbunden ist, einen zweiten Eingang, der mit der Hochdruckquelle (A) verbunden ist, und einen Ausgang, der mit der hinteren Kammer des Bremskraftverstärkers verbunden ist, wobei dieser Bremskraftverstärker eine zweite bewegliche Trennwandstruktur (54, 54') umfaßt, die zwischen der ersten beweglichen Trennwandstruktur (12) und der hinteren Wand (52, 52') angeordnet ist, unabhängig von der ersten beweglichen Wandstruktur (12) ist und die hintere Kammer in eine Arbeitskammer (16), die durch die erste bewegliche Trennwandstruktur (12) und die zweite bewegliche Trennwandstruktur (54, 54') begrenzt ist, und in eine Steuerkammer (50, 50') unterteilt, die durch die zweite bewegliche Trennwandstruktur (54, 54') und die hintere Wand (52, 52') begrenzt ist, wobei die erste Durchführung (42) des pneumatischen Kolbens (20) in die vordere Kammer (14) und die zweite Durchführung (44) in die Arbeitskammer (16) mündet, während der Ausgang des Elektroventils (68) mit einer Leitung (66) verbunden ist, die in die Steuerkammer (50, 50') mündet, wobei der pneumatische Kolben (20) dicht gleitend die zweite bewegliche Trennwandstruktur (54, 54') so durchquert, daß er bezüglich dieser frei gleiten kann, und wobei der pneumatische Kolben (20) einen Anschlag (72) aufweist, an dem die zweite bewegliche Trennwandstruktur (54, 54') anliegen kann, um den pneumatischen Kolben (20) mitzunehmen, wenn er nach vorn beaufschlagt ist, **dadurch gekennzeichnet, daß** die zweite bewegliche Trennwandstruktur (54') eine starre Scheibe (56') mit reduziertemDurchmesser und eine nachgiebige, ringförmige Membran (58') aufweist, die an der starren Scheibe (56') angebracht ist, und daß sich diese ringförmige Membran (58') elastisch verformen kann zwischen einer ersten Gestalt (I), die sie in Ruhestellung annimmt, wenn der Ausgang des Elektroventils (68) mit der Niederdruckquelle (V) verbunden ist, und einer zweiten Gestalt (II), die sie annimmt, wenn der Ausgang des Elektroventils (68) die Steuerkammer (50') und die Hochdruckquelle (A) miteinander verbindet, und in der sie an der ersten mobilen Trennwandstruktur (12) anliegt.

2. Pneumatischer Bremskraftverstärker nach Anspruch 1, **dadurch gekennzeichnet, daß** die nachgiebige, ringförmige Membran (58') auf ihrem Außenumfang mit einer ringförmigen Lippe (74) versehen ist, die auf dichte Weise mit der hinteren Wand (52') des Gehäuses (10) zusammenwirken kann, wenn sie sich in ihrer ersten Gestalt (I) befindet, und mit der ersten beweglichen Trennwandstruktur (12) zusammenwirken kann, wenn sie sich in ihrer zweiten Gestalt (II) befindet.

3. Pneumatischer Bremskraftverstärker nach Anspruch 1, **dadurch gekennzeichnet, daß** der Durchmesser der starren Scheibe (58') der zweiten beweglichen Trennwandstruktur (54') gleich etwa der Hälfte des Durchmessers der ersten beweglichen Trennwandstruktur (12) ist.
